# EUROPEAN PATENT APPLICATION

(11) **EP 1 323 553 A1**
(43) Date of publication of application: **02.07.2003**
(21) Application number: 01130951.5
(22) Date of filing: 28.12.2001
(51) Int. Cl.: B60G 17/015

(54) **Apparatus for controlling dampers used in a vehicle**

(71) Applicant: Mando Corporation, Pyungtaek-si, Kyonggi-do 451-821 (KR)
(72) Inventor: Koh, You-Seok, Pyungtaek-Si, Kyonggi-do 451-821 (KR)
(74) Representative: Lorenz, Werner, Dr.-Ing.

(57) **Abstract**

A damper controlling apparatus of a vehicle includes wheel speed sensors (11), each wheel speed sensor generating a wheel signal indicating an angular velocity of a corresponding wheel of the vehicle, a vertical velocity calculator (20) for obtaining a signal indicating a vertical velocity of a vehicle body by using the weel signals from the respective wheel speed sensors and a controller for generating a damper controlling signal by using the vertical velocity signal. The controller has a band pass filter (21) for receiving and processing the wheel signals, a low pass filter (22) for receiving and processing a signal provided from the band pass filter and a compensator (23) for compensating a signal provided from the low pass filter to produce the vertical velocity signal.

## Description

The present invention relates to an electronic controlled suspension (ECS) system using an angular velocity of each wheel of a vehicle; and, more particularly, to an ECS system filtering the wheel angular velocity to obtain a vertical velocity of a vehicle body of the vehicle and incorporating therein a two or three-step variable damper.

In spite of an anti-lock brake system (ABS) prepared at a vehicle, a conventional electronic controlled suspension (ECS) system additionally employs G-sensors, steering angle sensors, wheel sensors and so forth. Accordingly, the structure of the ECS system has been complicated and the price thereof has been high.

As a solution to the above-mentioned drawbacks of the conventional ECS system, another ECS system is disclosed in United States Patent No. 6,202,011 entitled "ELECTRONIC CONTROLLED SUSPENSION SYSTEM USING WHEEL SPEED". This ECS system uses a signal from a wheel speed sensor of the ABS instead of the G-sensors and the steering angle sensors. Thus, the structure of this ECS system is considerably simplified. However, this ECS system also has a certain drawback in that since the signal from the wheel speed sensor of the ABS system is processed by a fast fourier transform (FFT) integration algorithm before inputted to a control unit, a great amount of calculations are required for the signal processing. Therefore, this ECS system requires an expensive CPU (central processing unit) and cannot perform a real-time control of the damper.

It is, therefore, an object of the present invention to provide an ECS system using a simple algorithm for processing a signal from a wheel speed sensor to thereby be capable of controlling a damper on a real time basis by and an inexpensive CPU.

In accordance with one aspect of the invention, there is provided a damper controlling apparatus of a vehicle, including:
wheel speed sensors installed on each wheel of the vehicle, each speed sensor generating a wheel signal indicating an angular velocity of the corresponding wheel of the vehicle;
a vertical velocity calculator for obtaining a signal indicating a vertical velocity of a vehicle body by using the wheel signals from the respective wheel speed sensors; and
a controller for generating a signal for controlling a damping force of a damper by using the vehicle vertical velocity signal,
wherein the controller includes a band pass filter for receiving and processing the wheel signals generated by the respective wheel speed sensors, a low pass filter for receiving and processing a signal provided from the band pass filter and a compensator for compensating a signal provided from the low pass filter to produce the vertical velocity of the vehicle body.

In accordance with another aspect of the invention, there in provided a method for obtaining a vertical velocity of a vehicle body of a vehicle by using a wheel signal from a wheel speed sensor installed on each wheel of the vehicle, including the steps of:
band pass filtering the wheel signal;
low pass filtering the band pass filtered signal; and
compensating the low pass filtered signal.

The above and other objects and features of the present invention will become apparent from the following description of a preferred embodiment given in conjunction with the accompanying drawings, in which:
Fig. 1 provides a block diagram of an ECS system in accordance with a preferred embodiment of the present invention; and
Fig. 2 shows a block diagram for describing the inside of a control unit 10 in Fig. 1.

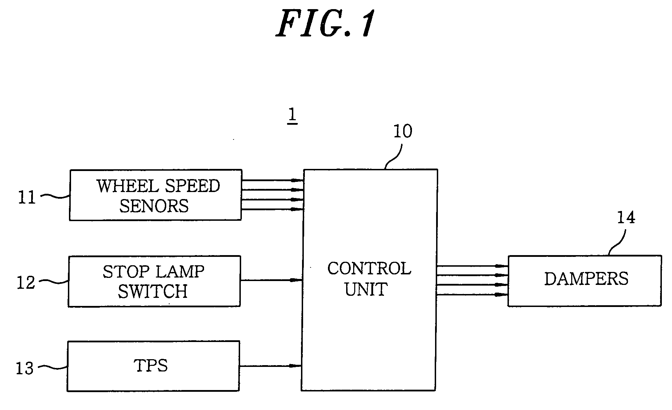

Referring to Fig. 1, there is provided a block diagram of an ECS system 1 in accordance with a preferred embodiment of the present invention. The ECS system 1 includes a control unit 10, wheel speed sensors 11, a stop lamp switch 12, a throttle position sensor (TPS) 13 and a damper 14. The wheel speed sensors 11 are respectively installed at each of front and rear wheels of a vehicle to generate wheel signals, which are provided to the control unit 10. The stop lamp switch 12 supplies a brake signal to the control unit 10. The TPS 13 provides the control unit 10 with a signal indicating the degree of openness of a throttle valve of an engine. Since each wheel speed sensor 11 is a part of an anti-lock brake system (ABS), it is not required to install additional wheel speed sensors 11 in the vehicle in case the vehicle has the ABS. Further, since the TPS 13 is a part of the TCS, it is needless to install an additional TPS 13 in the vehicle in case the ABS installed in the vehicle has the TCS. The damper 14 is preferably a two or three-step (SOFT-HARD or SOFT-NORMAL-HARD) variable damper capable of changing a damping force depending on damper controlling signals inputted from the control unit 10.

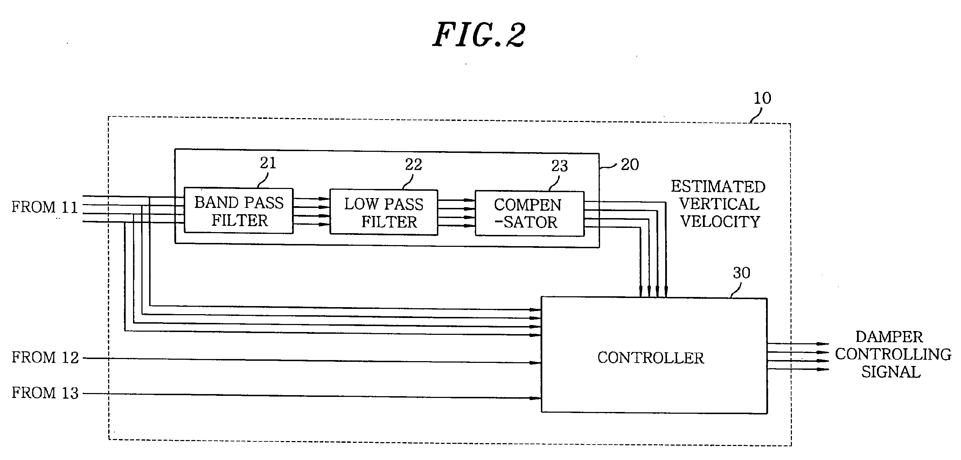

Fig. 2 sets forth a block diagram for describing the inside of the control unit 10 shown in Fig. 1. The control unit 10 includes a vertical velocity calculator 20 for obtaining a vertical velocity of a vehicle body by using the wheel signals generated from the respective wheel speed sensors 11 and a controller 30 for generating the damper controlling signals by using the wheel signals, the brake signal, the TPS signal and a vertical velocity signal from the vertical velocity calculator 20. The vertical velocity calculator 20 is a real time estimator having a band pass filter 21, a low pass filter 22 and a compensator 23. The band pass filter 21 receives the wheel signals inputted from the wheel speed sensors 11 and outputs a signal including road surface irregularity information and vehicle motion information which varies depending on the irregularity of the road surface. The low pass filter 22 removes highfrequency components from the signal outputted from the band pass filter 21 to thereby make smooth the signal from the band pass filter 21. The compensator 23 receives the signal outputted from the low pass filter 22 and compensates a phase and a magnitude differences between the signal outputted from the low pass filter 22 and a signal from a conventional vertical acceleration sensor, wherein the differences are generated due to intrinsic properties of the vehicle motion and the signal processing. Preferably, the band pass filter 21 and the low pass filter 22 are a digital filter, order of which is equal to or less than 3.

The operation of the ECS system 1 will now be described hereinafter with reference to Figs. 1 and 2.

If the wheel signal from each of the wheel speed sensors 11 is inputted to the vertical velocity calculator 20 of the control unit 10, the wheel signal is subjected to the band pass filter 21, the low pass filter 22 and the compensator 23, successively, to be outputted as a signal indicating vertical velocity of the vehicle body. Then, the outputted vertical velocity data is inputted into the controller 30.

The controller 30 analyzes the vertical velocity data. If a wave motion of the vehicle body is detected, the controller 30 generates the damper controlling signals, on the basis of which each of the dampers 14 changes the damping force so as to reduce the wave motion.

Further, the controller 30 measures a period of brake application by using the brake signal from the stop lamp switch 12 and obtains an acceleration of the vehicle by using the wheel signals from the respective wheel speed sensors 11. Thereafter, the controller 30 decides on the basis of the period of brake application and the acceleration of the vehicle whether an abrupt deceleration is applied or not. If the abrupt deceleration is detected, the controller 30 makes the damping force of front or all the dampers 14 HARD to reduce a dive of the vehicle.

The controller 30 also decides whether an abrupt acceleration is applied or not on the basis of the signal from the TPS 13 and the acceleration data. In case the ABS installed in the vehicle has no TCS, the decision is made by using only the acceleration data. In case it is decided that the vehicle is experiencing a sudden acceleration, the controller 30 makes the damping force of rear or all the dampers 14 HARD to reduce a squat of the vehicle.

Furthermore, the controller 30 estimates the speed differences between left and right wheels of the vehicle by using the wheel signals from the respective wheel speed sensors 11 and determines whether a sharp steering maneuver of the vehicle is performed or not on the basis of the estimated speed differences. If it is found that the vehicle is abruptly steered in a left/right direction, the controller 30 makes the damping force of right/left dampers (or all the dampers) 14 HARD to reduce a roll of the vehicle.

Further, by using a magnitude and a peak occurring interval of the vertical velocity signal of the vehicle, the controller 30 determines whether the vehicle is passing a bump on a road or not. The controller 10 transfers the damper controlling signals to each of the dampers 14 after the vehicle passes over the bump to thereby reduce the wave motion of the vehicle.

As described above, the present invention provides a simple method for obtaining the vertical velocity data of the vehicle body. The wheel signals inputted to the control unit 10 from the wheel speed sensors 11 prepared at each wheel of the vehicle go through the band pass filter 21, the low pass filter 22 and the compensator 23, successively, to be outputted as the vertical velocity data of the vehicle body. Accordingly, the algorithm for obtaining the vertical velocity of the vehicle body can be simplified and the amount of calculations can also be reduced. Therefore, an expensive CPU is not required and the price of the ECS system can be decreased. Further, since the ECS system employs the wheel speed sensors incorporated in the ABS of the vehicle, the structure of the ECS system can be simplified.

While the invention has been shown and described with respect to the preferred embodiment, it will be understood by those skilled in the art that various changes and modifications may be made without departing from the scope of the invention as defined in the following claims.

## Claims

1. A damper controlling apparatus of a vehicle, comprising:
wheel speed sensors installed on each wheel of the vehicle, each speed sensor generating a wheel signal indicating an angular velocity of the corresponding wheel of the vehicle;
a vertical velocity calculator for obtaining a signal indicating a vertical velocity of a vehicle body by using the wheel signals from the respective wheel speed sensors; and
a controller for generating a signal for controlling a damping force of a damper by using the vertical velocity signal,
wherein the controller includes a band pass filter for receiving and processing the wheel signals generated by the respective wheel speed sensors, a low pass filter for receiving and processing a signal provided from the band pass filter and a compensator for compensating a signal provided from the low pass filter to produce the vertical velocity signal.

2. The apparatus of claim 1, wherein the controller performs a control process comprising the steps of:
calculating an angular velocity difference of left and right wheels by using the wheel signals from the respective wheel speed sensors;
determining whether a sharp steering maneuver is performed or not by using the calculated angular velocity difference; and
generating a damper controlling signal for reducing a roll of the vehicle if it is determined that the vehicle is under the sharp steering maneuver.

3. The apparatus of claim 1, wherein the controller performs a control process comprising the steps of:
calculating an angular acceleration of each wheel of the vehicle by using the wheel signals provided from the wheel speed sensors;
determining whether a sudden acceleration of the vehicle is applied or not by using the calculated acceleration; and
generating a damper controlling signal for reducing a squat of the vehicle if it is determined that the vehicle is experiencing a sudden acceleration.

4. The apparatus of claim 3, further comprising a throttle position sensor (TPS) for providing a throttle valve position signal indicating a degree of openness of the throttle valve to the controller, wherein the controller determines whether the vehicle makes a sudden acceleration or not by using the angular accelerations of the respective wheels and the throttle valve position signal.

5. The apparatus of claim 1, further comprising a stop lamp switch for providing a brake signal to the controller, wherein the controller calculates an angular acceleration of each wheel of the vehicle by using the wheel signals provided from the respective wheel speed sensors, measures a period of brake application, determines whether a sudden decrease of a velocity of the vehicle is made or not by using the accelerations of the respective wheels and the period of brake application and generates a damper controlling signal for reducing a dive of the vehicle if it is determined that the vehicle is experiencing a sudden decrease of the velocity.

6. The apparatus of claim 1, wherein the controller performs a control process comprising the steps of:
obtaining the signal outputted from the vertical velocity calculator;
determining whether the vehicle goes through a bump or not by using a magnitude and a peak occurring interval of the signal from the vertical velocity calculator; and
generating a damper controlling signal for reducing a wave motion of the vehicle if it is determined that the vehicle has passed the bump.

7. The apparatus of claim 1, wherein each wheel speed sensor is one element of an anti-lock brake system installed in the vehicle.

8. The apparatus of claim 1, wherein the damper is a two-step variable damper.

9. The apparatus of claim 1, wherein the damper is a three-step variable damper.

10. A method for obtaining a vertical velocity of a vehicle body of a vehicle by using a wheel signal from a wheel speed sensor installed on each wheel of the vehicle, comprising the steps of:
band pass filtering the wheel signal;
low pass filtering the band pass filtered signal; and
compensating the low pass filtered signal.

11. The method of claim 10, wherein each wheel speed sensor is one element of an anti-lock brake system installed in the vehicle.
